# EUROPÄISCHE PATENTSCHRIFT

(11) **EP 0 441 122 B1**
(45) Veröffentlichungstag und Bekanntmachung des Hinweises auf die Patenterteilung: **06.04.1994**
(21) Anmeldenummer: 91100226.9
(22) Anmeldetag: 09.01.1991
(51) Int. Cl.: B60T 1/00, B60T 8/00

(54) **Verfahren zum Betrieb eines Antiblockierregelsystems**
Method of controlling an Anti-skid control system
Procédé de réglage d'un système anti-bloquant

(30) Priorität: 05.02.1990 DE 4003327
(43) Veröffentlichungstag der Anmeldung: 14.08.1991
(73) Patentinhaber: ROBERT BOSCH GMBH, 70442 Stuttgart (DE)
(72) Erfinder: Schäfer, Jochen, Dipl.-Ing.(BA), W-7140 Ludwigsburg (DE)

(56) Entgegenhaltungen:
- EP-A- 0 328 155
- EP-A- 0 341 866
- WO-A-87/05869
- DE-A- 2 706 278

## Beschreibung

### Stand der Technik

Es ist bekannt, das Auslösen einer ABS-Regelung durch Störsignale zu erschweren. (Filterung von Störsignalen EP-PS 180721).

Kommt durch Fahrbahnstörungen eine ABS-Regelung zustande, obwohl der Fahrer überhaupt nicht bremsen will, so vergeht, bis die Regelung zu Ende kommt, eine relativ lange Zeit (etwa 1 sec). Soll in dieser Zeit gebremst werden, so findet der Fahrer wegen des gepulsten Druckaufbaus nach einem Druckabbau oft ein hartes Pedal vor.

### Vorteile der Erfindung

Durch die Erfindung wird mit einfachen Mitteln erreicht, daß die Aufpulsreihe nicht zu lange dauert und somit schneller ein vom Fahrer gewünschtes Bremsen möglich ist.

### Figurenbeschreibung

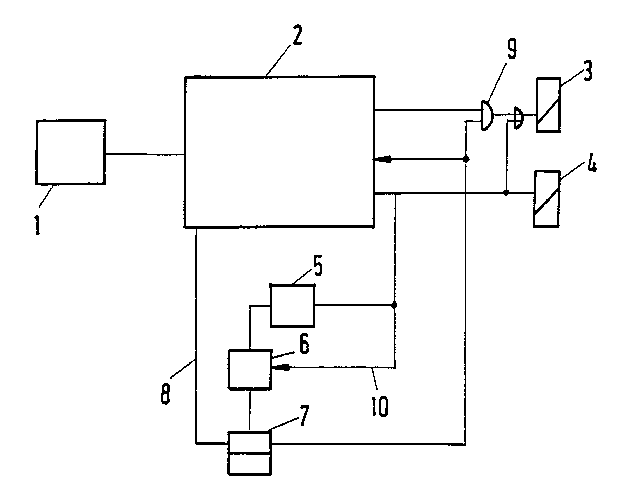

Die Zeichnung zeigt ein Ausführungsbeispiel der Erfindung in Prinzipdarstellung, wobei nur ein einkanaliges ABS der Einfachheit halber dargestellt ist. Dieses besteht aus einem Meßwert-geber 1 für die Radgeschwindigkeit, einer Auswerteschaltung 2 und aus einem Ein- und einem Auslaßventil 3 bzw. 4 zur Bremsdrucksteuerung.

Bei einer durch einen vom Fahrer eingesteuerten Bremsdruck hervorgerufenen Blockiergefahr wird zuerst Druck über das Auslaßventil 4 abgebaut und gegebenenfalls nach einer Haltezeit der Druck gepulst aufgebaut bis eine erneute Instabilität erneuten Druckabbau auslöst.

Beim Fahren z.B. über ein Schlagloch kann durch eine sensierte Verzögerung des Rads ein Druckabbau ausgelöst werden. Dessen Dauer wird mittels eines Zeitmeßblocks 5 gemessen und kann z.B. 50 msec betragen. Ein weiterer Block 6 erhöht diese Zeit z.B. auf das Zehnfache (0,5 sec) und speichert den Wert als Filterzeit ab. Wird nun die Druckaufpulsreihe gestartet, so wird dies über eine Leitung 8 gemeldet; hierdurch wird eine monostabile Stufe 7 gekippt. Die Zeitkonstante der monostabilen Stufe 7 wird durch die im Block 6 gespeicherte Filterzeit bestimmt. Dies bedeutet, daß ab Beginn des gepulsten Druckaufbaus für die im Block 6 gespeicherte Filterzeit (0,5 sec) ein Und-Gatter 9 durchlässig erhalten wird, es sei denn, eine erneute Instabilität löscht den Speicher im Block 6 (Leitung 10) und läßt die monostabile Kippstufe 7 zurückkippen. Mit dem Ende der Durchlässigkeit des Und-Gatters 9 am Ende der gespeicherten Filterzeit wird eine weitere gepulste Ansteuerung des Einlaßventils 3 unterbunden und das Einlaßventil geht in Druckaufbaustellung, es kann vom Fahrer weiter Druck eingesteuert werden. Auch die Auswerteschaltung wird dann zurückgesetzt.

Da bei "normalen", durch zu hohen Bremsdruck hervorgerufenen, Radinstabilitäten die Zeit, in der sich das Rad im instabilen Bereich befindet, meist größer 100ms beträgt, ist eine Verschlechterung der ABS-Regelung nicht zu erwarten, da meist die nachfolgende Instabilität vor Ablauf der Filterzeit auftritt (bei 100ms Instabilität beträgt die Filterzeit 1s).

Die Filterung darf immer nur zu Beginn eines Regelvorgangs wirksam sein. Dies bedeutet, daß z.B. das Signal auf Leitung 8 nur beim Hochpulsen im ersten Regelzyklus auftreten darf.

Man kann die Zeit des Druckabbaus auch mittels eines Zählers messen, dem dann z.B. bei jedem Rechentakt des Rechners 2 und festgestellter Instabilität ein Impuls zugeführt wird. In einem zweiten Zähler wird dieser Zeitwert in einem höheren Zeitwert (Filterzeit) umgesetzt. Durch die Rückwertszählzeit dieses Zählers bis auf 0 ist die Sperrzeit für das Und-Gatter 9 gegeben.

Die erfindungsgemäße Filterung läßt sich natürlich auch durch ein in dem Rechner 2 eingegebenes Programm realisieren.

## Patentansprüche

1. Verfahren zum Betrieb eines Antiblockierregelsystems für Fahrzeuge enthaltend den Rädern zugeordnete Sensoren (1) zur Bestimmung der Radgeschwindigkeiten, eine Auswerteschaltung (2), der die Sensorsignale zugeführt werden und die Bremsdrucksteuersignale erzeugt und Bremsdrucksteuereinrichtungen (3,4), die den Bremsdruck im Sinne des Vermeidens von blockierten Rädern variieren und weiterhin enthaltend eine Einrichtung, die beim ersten Auftreten einer Instabilität in jeder Regelungsphase eine Filterung bewirkt und eine weitere Einrichtung, die den Bremsdruck nach Verschwinden der Instabilität gepulst bis zum Auftreten einer erneuten Instabilität aufbaut, dadurch gekennzeichnet, daß nach dem Auftreten der ersten Instabilität die Zeit der Instabilität ermittelt wird und daß diese Zeit in eine dagegen längere Filterzeit umgesetzt wird, daß im ersten Regelzyklus diese längere Filterzeit ohne vorheriges Auftreten einer neuen Instabilität die Länge des gepulsten Druckaufbaus bestimmt und daß danach die Bremsdrucksteuereinrichtung (3,4) in ihre Druckaufbaustellung geschaltet wird.

## Claims

1. Method for the operation of an anti-lock control system for vehicles comprising sensors (1), assigned to the wheels, for determining the wheel speeds, an evaluation circuit (2), which is supplied with the sensor signals and produces brake pressure control signals, and brake pressure control devices (3, 4) which vary the brake pressure in order to avoid wheels locking up, and further comprising a device which effects filtering upon the first occurrence of an instability in each control phase, and a further device, which builds up the brake pressure in a pulsed manner after the disappearance of the instability until the occurrence of another instability, characterized in that, after the occurrence of the first instability, the time of the instability is determined and in that this time is converted into a filtering time, longer than the aforesaid time, in that in the first control cycle this longer filtering time determines the length of the pulsed pressure build-up without the prior occurrence of a new instability and in that the brake pressure control device (3, 4) is then switched to its pressure build-up position.

## Revendications

1. Procédé de mise en oeuvre d'un système antiblocage pour véhicules, comprenant des capteurs (1) associés aux roues pour déterminer leurs vitesses, un circuit d'exploitation (2) recevant les signaux des capteurs et générant les signaux de commande de pression de frein et des installations de commande de pression de frein (3, 4) qui modifient la pression de frein de manière à éviter le blocage des roues ainsi qu'une installation qui, à la première apparition d'une instabilité dans chaque phase de régulation, provoque une filtrage et une autre installation qui fait monter la pression de frein de manière impulsionnelle après disparition de l'instabilité, jusqu'à l'arrivée d'une nouvelle instabilité, caractérisé en ce qu'après l'arrivée de la première instabilité, on détermine la durée de l'instabilité et on convertit ce temps en un temps de filtrage plus long, et dans le premier cycle de régulation ce temps de filtrage plus long définit la durée de la montée en pression, impulsionnelle, en l'absence d'apparition préalable d'une nouvelle instabilité, puis l'installation de commande de pression (3, 4) passe en position de montée en pression.
